# FASCICULE DE BREVET EUROPEEN

(11) **EP 3 603 076 B1**
(45) Date de publication et mention de la délivrance du brevet: **07.06.2023**
(21) Numéro de dépôt: 18722646.9
(22) Date de dépôt: 27.03.2018
(51) Int. Cl.: G02B 27/01, G06F 1/16, H04N 7/08, H04N 21/218, H04N 21/439, H04N 21/6587, H04N 21/81, G06F 3/01, G09B 9/30

(54) **PROCÉDÉ DE SÉLECTION D'AU MOINS UNE PARTIE D'IMAGE À TÉLÉCHARGER PAR ANTICIPATION POUR RESTITUER UN FLUX AUDIOVISUEL**
VERFAHREN ZUR AUSWAHL VON MINDESTENS EINEM BILDABSCHNITT, DER ZUM RENDERN EINES AUDIOVISUELLEN STREAMS VORAUSSCHAUEND HERUNTERGELADEN WIRD
METHOD FOR SELECTING AT LEAST ONE IMAGE PORTION TO BE DOWNLOADED ANTICIPATORILY IN ORDER TO RENDER AN AUDIOVISUAL STREAM

(30) Priorité: 31.03.2017 FR 1752792
(43) Date de publication de la demande: 05.02.2020
(73) Titulaire: Orange, 92130 Issy-les-Moulineaux (FR)
(72) Inventeur: HOUZE, Patrice, 92326 Châtillon Cedex (FR); PALLONE, Grégory, 92326 Châtillon Cedex (FR)
(86) Numéro de dépôt international: PCT/FR2018/050740
(87) Numéro de publication internationale: WO 2018/178560

(56) Documents cités:
- EP-A1- 3 086 217
- US-A1- 2016 140 396
- US-A1- 2016 300 392
- US-A1- 2017 048 498
- US-A1- 2017 289 219
- US-B1- 9 473 758

## Description

### Domaine

L'invention appartient au domaine de la restitution de contenus audiovisuels, et concerne plus particulièrement un procédé d'optimisation de la bande passante lors de la consultation d'un contenu audiovisuel panoramique à partir d'un dispositif d'immersion.

### Art antérieur

Les casques virtuels permettent la visualisation de contenus audiovisuels panoramiques. Ils permettent à un utilisateur de s'immerger dans le contenu qu'il consulte en proposant une expérience vidéo à 360° ou à 4π stéradian. De tels casques sont généralement pourvus de capteurs gyroscopiques permettant de déterminer l'orientation de l'utilisateur du casque par rapport à une direction de référence. A partir de l'orientation déterminée, le dispositif sélectionne une partie du contenu panoramique à restituer dans le casque correspondant à la direction dans laquelle est orienté l'utilisateur. Ainsi, l'utilisateur du casque peut regarder dans différentes direction pour observer diverses parties du contenu audiovisuel. Cette sensation d'immersion est généralement renforcée par une restitution stéréoscopique ou en 3 dimensions de la composante vidéo et par la spatialisation de la composante audio du contenu. De cette façon, la partie de la vidéo affichée ainsi que la position des sources sonores, lorsqu'elles sont restituées au moyen d'un casque audio, sont modifiées pour refléter chaque modification d'orientation de la tête de l'utilisateur.

Un tel dispositif d'immersion nécessite un contenu multimédia adapté. En particulier, afin de pouvoir déterminer une image à afficher qui correspondre à chaque orientation particulière de l'utilisateur, la composante vidéo doit être une vidéo panoramique ou sphérique. De telles séquences vidéo peuvent par exemple être capturées à partir d'un dispositif d'acquisition à 360 degrés, comme par exemple à partir d'une caméra panoramique.

On comprend que de tels contenus numériques sont particulièrement volumineux et qu'ils requièrent une bande passante importante lorsqu'ils sont consultés en ligne, par exemple via des techniques de téléchargement continu.

Une solution pour réduire la quantité de données à transmettre lors de la consultation de tels contenus consiste à ne télécharger que les parties de la vidéo nécessaires à la restitution de l'image correspondant à l'orientation courante de l'utilisateur. De cette façon, les parties d'image qui sont hors du champ de vision de l'utilisateur ne sont pas téléchargées. Cette technique présente toutefois un inconvénient lié au temps de transmission des parties d'image, les changements d'orientation de l'utilisateur étant répercutés avec un retard dans le dispositif de restitution.

Il est possible d'améliorer la situation en téléchargeant, à partir d'une représentation de basse qualité et en plus des parties de l'image nécessaires à la visualisation, des parties de l'image qui ne sont pas dans le champ de vision de l'utilisateur. Ainsi, lorsque l'utilisateur change d'orientation, les parties de l'image correspondantes sont immédiatement disponibles dans une qualité réduite et avec une latence améliorée. Lorsque l'orientation de l'utilisateur est à nouveau stabilisée, les parties d'images correspondant au champ de vision de l'utilisateur sont téléchargées à partir d'une représentation de haute qualité. Bien qu'elle permette d'éviter une latence excessive lors des déplacements de l'utilisateur, cette technique présente l'inconvénient de mobiliser une bande passante relativement importante pour télécharger des images qui ne seront pour la plupart jamais visualisées par l'utilisateur, car elles resteront hors de son champ de vision.

Il existe donc un besoin pour une solution permettant d'optimiser la bande passante utilisée lors de la consultation de contenus audiovisuels au moyen d'un dispositif de visualisation immersif tel qu'un casque virtuel, tout en proposant aux utilisateurs une expérience de bonne qualité.

L'invention vient améliorer la situation.

### Résumé de l'invention

A cet effet, l'invention concerne procédé de sélection d'au moins une partie d'image à télécharger pour restituer un contenu audiovisuel au moyen d'un dispositif de restitution, le procédé étant tel qu'il comporte des étapes de détermination de l'emplacement d'une source sonore dans une composante audio spatialisée du contenu audiovisuel, de détermination d'une direction d'observation future à partir de l'emplacement déterminé, de sélection d'au moins une partie de l'image à partir de la direction d'observation future déterminée, et de téléchargement de la au moins une partie d'image sélectionnée.

Afin de pouvoir guider la sélection d'une portion d'image sur laquelle doit porter l'effort de débit, et donc de qualité, la présente invention propose d'utiliser des informations issues d'une composante audio du contenu audiovisuel. Le procédé propose ainsi de déterminer des parties d'image à télécharger en fonction de la localisation d'évènements sonores dans un environnement audio spatialisé. L'invention tire parti du fait que lorsqu'un évènement sonore se produit, un être humain a tendance à se tourner vers la source de cet évènement sonore car il correspond généralement également à une source visuelle à identifier. Par exemple, lorsqu'une personne entend une porte s'ouvrir derrière elle, elle va généralement se retourner afin de savoir qui entre dans la pièce. Le procédé vise à anticiper ce type de comportement en téléchargeant des parties d'image qui seront dans le champ de vision de l'utilisateur s'il s'oriente effectivement vers l'origine de l'évènement sonore. De même, lorsqu'une source sonore se déplace, son déplacement peut être estimé de manière à prédire un emplacement futur de la source sonore. De cette façon, des parties d'image correspondant au trajet effectué par la source sonore peuvent être sélectionnées. L'invention trouve une application avantageuse dans la diffusion de contenus vidéo panoramiques, notamment lorsque que le champ de vision de l'utilisateur ne lui permet pas de voir l'image dans son intégralité. Ainsi par exemple, si le sujet regarde devant lui dans une scène silencieuse, et qu'une voix apparaît subitement sur la gauche, alors le débit des portions vidéo correspondant à la partie gauche de l'image sera augmenté, tandis que le débit des portions vidéo correspondant à la partie droite de l'image sera diminué.

Dans une première variante, seules les images ainsi sélectionnées sont téléchargées, les images qui ne sont pas visibles par l'utilisateur n'étant pas téléchargées de manière à réduire la bande passante nécessaire à la consultation du contenu.

Dans une seconde variante, la totalité des images du contenu est téléchargée à partir d'une première représentation correspondant à une première qualité d'image, les images sélectionnées selon le procédé étant téléchargées à partir d'une seconde représentation dont la qualité est supérieure à la première qualité d'image.

La direction d'observation future peut correspondre à un angle de rotation de l'utilisateur depuis une position d'observation initiale.

Selon un mode de réalisation particulier, l'emplacement de la source sonore à partir de laquelle est déterminée la direction d'observation future est déterminé par une analyse d'au moins une composante audio du contenu audiovisuel.

La composante audio d'un contenu audiovisuel peut comprendre un ou plusieurs canaux. Par exemple, les formats stéréo comprennent deux canaux prévus pour être disposés à droite et à gauche de l'auditeur, le format 5.1 (sourround) correspondant à 5 haut-parleurs dans le plan horizontal et 1 caisson de basse, ou encore le format 5.1.2 qui comprend en plus deux haut-parleurs en élévation. D'autres formats existent et peuvent comprendre un nombre quelconque de canaux. Les ondes sonores constituant ces différents canaux audio sont conçues pour alimenter directement un nombre correspondant de haut-parleurs disposés dans une configuration particulière. Ainsi, l'invention propose de déterminer l'emplacement d'une source sonore par rapport à la position et l'orientation de l'utilisateur dans la scène audiovisuelle observée, à partir d'une analyse d'au moins une composante audio du contenu audiovisuel. Par exemple, l'emplacement d'un évènement sonore peut être déterminé à partir de la position (connue) du haut-parleur dont l'énergie est la plus élevée.

Selon un mode de réalisation particulier, l'emplacement de la source sonore à partir de laquelle est déterminée la direction d'observation future est déterminé par des métadonnées associées à une ou plusieurs composantes audio du contenu audiovisuel.

Certains formats de codage audio prévoient la transmission d'objets sonores comprenant un son (souvent mono) et des métadonnées associées. Les métadonnées indiquent notamment la position à laquelle cet objet sonore doit être perçu par l'auditeur. Un tel objet est traité par un dispositif de restitution configuré pour générer un signal audio destiné à un ou plusieurs haut-parleurs particuliers, le signal audio généré étant tel que l'objet sonore sera perçue par l'utilisateur comme provenant de l'emplacement indiqué dans les métadonnées. L'un des intérêts d'une telle approche est que le rendu de l'objet sera adapté au système de restitution de l'auditeur, même si le système de sonorisation utilisé diffère par le nombre et la position des haut-parleurs avec le système utilisé pour produire le contenu. Ainsi, dans un tel mode de réalisation de l'invention, l'emplacement d'une source sonore est déterminé à partir des métadonnées associées aux objets sonores.

Selon une réalisation particulière de l'invention, le procédé est tel que la au moins une partie d'image sélectionnée comprend en outre des parties d'images visibles depuis au moins une direction d'observation intermédiaire comprise entre une direction d'observation courante obtenue à partir de données issues de capteurs associés au dispositif de restitution et la direction d'observation future déterminée.

L'invention propose d'anticiper le trajet effectué par les yeux ou la tête du sujet lorsqu'il s'oriente dans la direction d'un évènement sonore. Par exemple, lorsqu'un utilisateur regarde devant lui et qu'un évènement sonore est détecté sur sa gauche, l'invention propose de sélectionner non seulement les parties d'image correspondant au champ de vision de l'utilisateur lorsqu'il est orienté vers la source sonore, mais aussi les parties d'image visibles pendant le déplacement de l'utilisateur.

De cette façon, lorsqu'un utilisateur se retourne parce qu'il a entendu un bruit particulier, les images à afficher lors de la rotation de l'utilisateur sont immédiatement disponibles.

Selon un mode particulier de réalisation, la direction d'observation intermédiaire correspond à une direction d'observation comprise entre la direction d'observation courante et la direction d'observation future lorsque l'utilisateur effectue une rotation depuis la direction d'observation courante vers la direction d'observation future, dans un sens qui minimise l'amplitude de cette rotation.

Lorsqu'un utilisateur effectue une rotation depuis une première direction d'observation vers une seconde direction d'observation, il peut choisir de se retourner vers la droite (dans le sens horaire) ou vers la gauche (dans le sens anti horaire). A moins que la seconde direction ne soit exactement à l'opposé de la direction d'observation initiale, il existe un sens de rotation optimal qui minimise l'angle de rotation nécessaire à l'utilisateur pour s'orienter dans la seconde direction d'observation. Etant donné qu'il est hautement probable qu'un utilisateur effectue une rotation dans le sens qui nécessite la plus petite amplitude de mouvement, l'invention propose avantageusement d'anticiper le téléchargement des images qui seront nécessaire pour restituer la vidéo lors d'une telle rotation. De cette façon, le procédé optimise l'usage de la bande passante disponible en ne téléchargeant pas les parties d'image qui ont une faible probabilité d'être visualisées par l'utilisateur.

Le procédé propose de déterminer, à partir de la direction d'observation initiale et de la position d'observation future, un sens de rotation optimal qui minimise la rotation à effectuer, ou les rotations lorsque des rotations selon plusieurs axes sont nécessaires pour que l'utilisateur se trouve face à la direction de provenance de l'évènement sonore.

Ainsi, le procédé comprend la sélection d'au moins une partie d'image visible par un utilisateur effectuant une rotation par le plus court chemin, depuis une direction d'observation initiale jusqu'à la direction d'observation déterminée par l'emplacement de l'évènement sonore.

Prenons l'exemple d'un utilisateur équipé d'un casque virtuel qui visualise un contenu vidéo à 360 degrés. Lorsque l'utilisateur est orienté vers le nord et qu'il perçoit un évènement sonore à l'est, il est probable que, par réflexe, il s'oriente vers l'est afin de déterminer l'origine de bruit perçu. Pour s'orienter vers l'origine du bruit, l'utilisateur peut effectuer une rotation de 270° vers l'ouest ou bien une rotation de 90° vers l'est. Il est probable que l'utilisateur choisisse instinctivement la seconde option car elle minimise la rotation à effectuer. L'invention permet ainsi de déterminer le sens de rotation de l'utilisateur le plus probable à partir de l'origine d'un évènement sonore de façon à sélectionner des parties d'images correspondant à des directions d'observations intermédiaires empruntées par l'utilisateur au cours d'une rotation par le plus court chemin.

Bien entendu, selon l'emplacement de l'évènement sonore, l'utilisateur peut être amené à effectuer des rotations selon un axe vertical et/ou horizontal. Par exemple, si l'origine de l'évènement sonore est située en haut sur la gauche de l'utilisateur, deux rotations seront nécessaires pour qu'il se positionne face à l'évènement : une rotation vers la gauche selon un axe vertical, et une rotation vers le haut selon un axe horizontal. Le chemin le plus court pour passer de la direction d'observation initiale à la direction d'observation pour être face à l'évènement sonore correspond à une rotation simultanée selon les deux axes.

Selon un mode particulier de réalisation, dans lequel l'emplacement de la source sonore déterminé est modifié de manière telle que l'utilisateur soit incité à effectuer au moins une rotation dans un sens particulier pour s'orienter vers la source sonore.

Lorsqu'un évènement sonore est détecté à un emplacement situé dans une direction opposée à la direction d'observation courante de l'utilisateur, il est difficile de prédire si l'utilisateur va se retourner vers la droite ou vers la gauche. Dans un tel cas, l'invention propose de déplacer la source sonore de manière à inciter l'utilisateur à se retourner dans un sens plutôt qu'un autre. De cette manière, l'invention permet d'augmenter la probabilité qu'un utilisateur se retourne dans un sens pour lequel des parties d'images correspondant à des directions d'observation intermédiaires ont été sélectionnées.

Selon un autre aspect, l'invention concerne un dispositif de de sélection d'au moins une partie d'image à télécharger pour restituer un contenu audiovisuel au moyen d'un dispositif de restitution immersif, le dispositif étant tel qu'il comporte :
- des moyens de détermination de l'emplacement d'une source sonore dans une composante audio spatialisée du contenu audiovisuel,
- des moyens de détermination d'une direction future à partir de l'emplacement déterminé,
- des moyens de sélection d'au moins une partie de l'image à partir de la direction d'observation future déterminée, et
- des moyens de téléchargement de la au moins une partie d'image sélectionnée.

Selon une réalisation particulière, l'invention concerne un terminal comprenant un dispositif de sélection tel que décrit ci-dessus.

Selon une réalisation particulière, l'invention concerne un serveur comprenant un dispositif de sélection tel que décrit ci-dessus.

Dans un mode particulier de réalisation, les différentes étapes du procédé selon l'invention sont déterminées par des instructions de programmes d'ordinateurs.

En conséquence, l'invention vise également un programme d'ordinateur comportant des instructions pour l'exécution des étapes du procédé de sélection, lorsque ledit programme est exécuté par un processeur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Enfin, l'invention concerne un support d'informations lisible par un processeur sur lequel est enregistré un programme d'ordinateur comprenant des instructions pour l'exécution des étapes du procédé de sélection.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de sélection tel que défini ci-dessus.

Les terminaux, serveurs, dispositifs et programmes présentent au moins des avantages analogues à ceux conférés par le procédé sélection.

### Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- Les figures 1a et 1b illustrent un utilisateur équipé d'un dispositif de restitution immersif visualisant un contenu audiovisuel panoramique,
- La figure 2 illustre les principales étapes du procédé de sélection selon un mode particulier de réalisation de l'invention,
- La figure 3 illustre un déplacement d'une source sonore dans une scène audio spatialisée, et
- La figure 4 représente l'architecture d'un dispositif de sélection selon un mode particulier de réalisation de l'invention.

### Description détaillée

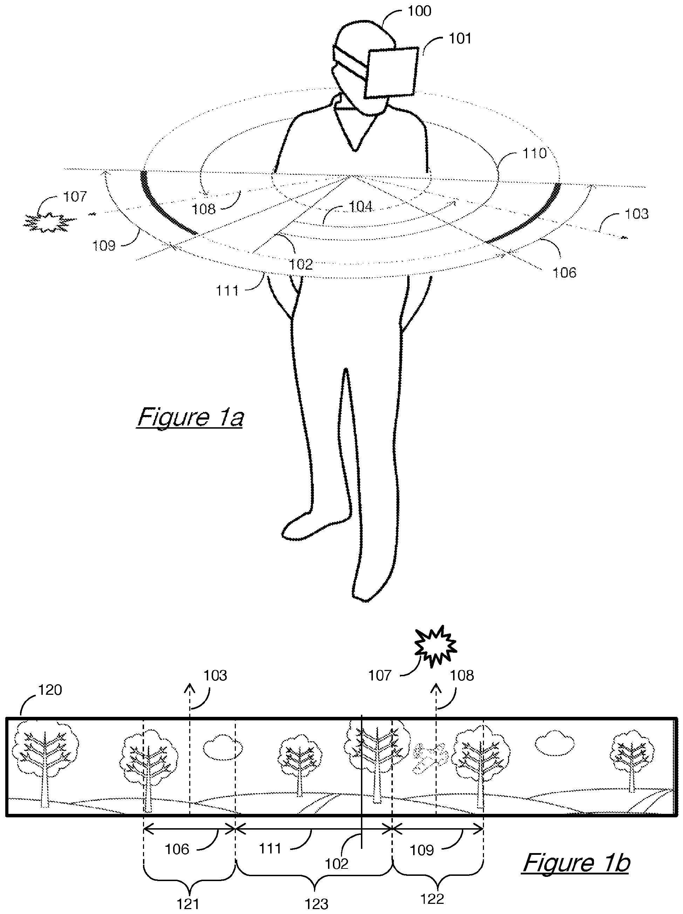

La figure 1a représente un utilisateur 100 équipé d'un casque de réalité virtuelle (ou casque virtuel) 101. Le casque virtuel est équipé de capteurs de mouvements non représentés, comme par exemple un gyroscope permettant de mesurer un angle de rotation du casque virtuel 100 par rapport à une position de référence 102. L'utilisateur 100 est orienté dans une direction 103 formant un angle 104 par rapport à la position de référence 102.

La dénomination « casque virtuel » utilisée dans cet exposé n'est pas limitative. Il peut s'agir par exemple d'un casque virtuel associé à un terminal de traitement tel qu'un ordinateur personnel ou un terminal mobile de type smartphone. Le casque virtuel 101 peut également être un équipement optique passif porté par l'utilisateur, dans lequel est inséré un terminal mobile de type smartphone ou tablette. Un tel casque virtuel peut être un casque de réalité augmentée ou une paire de lunettes connectées adaptées pour afficher un contenu superposé avec les éléments du monde réel perçus par l'utilisateur.

Le casque virtuel 101 comprend en outre un écran adapté pour restituer un contenu vidéo panoramique, comme par exemple le contenu panoramique 120 illustré sur la figure 1b. Le contenu vidéo est par exemple un contenu vidéo panoramique à 360 degrés consulté à partir d'un serveur hébergeant le contenu. Le contenu est ainsi téléchargé et restitué en continu dans le casque 101. Le contenu est par exemple transmis au casque 101 selon un protocole de téléchargement continu adaptatif (streaming) conforme au standard MPEG-DASH (Dynamic Adaptive Streaming over http), et en particulier au standard MPEG-DASH SRD (Spatial Relationship Description). Le contenu vidéo peut être encodé conformément au standard HEVC, et tirer parti d'un encodage par tuiles indépendantes.

Le casque virtuel est en outre configuré pour n'afficher qu'une partie de la vidéo panoramique correspondant à une direction d'observation (103, 108) et un champ de vision (106, 109) de l'utilisateur. Ainsi, grâce aux capteurs de mouvements, le casque virtuel peut afficher à chaque instant la partie de la vidéo correspondant à l'orientation courante de l'utilisateur. L'utilisateur est ainsi immergé dans le contenu audiovisuel qu'il consulte et peut se retourner pour observer le contenu audiovisuel dans toutes les directions. Les parties d'image ou de vidéo sont par exemple telles que définies dans le standard H.265, ou encore des slices tels que définis dans d'autres formats de compression vidéo tels que H.264 par exemple. Qu'il s'agisse de tuiles, de slices ou de toutes autres parties de vidéo ou d'image, les parties d'images téléchargées sont encodées de manière à pouvoir être décodées indépendamment les unes des autres. De cette manière, la partie de l'image visible dans le casque virtuel lorsque l'utilisateur est orienté dans une direction particulière peut être décodée sans que les autres parties de l'image ne soient téléchargées.

Sur la figure 1a, l'utilisateur est orienté dans une direction d'observation 103. A partir de cette direction d'observation 103 et du champ de vision 106 de l'utilisateur, le casque virtuel sélectionne une partie 121 de l'image 120 à restituer dans le casque. Ainsi, seules les parties d'image affichées dans le casque virtuel sont téléchargées, ce qui permet d'optimiser la bande passante nécessaire à la consultation du contenu en ligne. Toutefois, lorsque l'utilisateur change rapidement de direction d'observation, les images correspondant à cette nouvelle direction doivent être téléchargées. Le temps de transfert de ces nouvelles données d'image occasionne un décalage entre l'affichage et la direction dans laquelle regarde l'utilisateur. Cette latence dégrade la sensation d'immersion sensée être procurée par le dispositif 101. Afin de surmonter cet inconvénient, une solution consiste à télécharger toutes les parties d'image composant la vidéo dans une qualité réduite de façon à anticiper toute rotation de l'utilisateur. Afin d'améliorer la qualité lorsque la direction de l'utilisateur est stabilisée, les images correspondant à la direction observée par l'utilisateur sont téléchargées à partir d'une représentation du contenu ayant qualité supérieure. Une telle disposition permet de surmonter les problèmes de latence causés par des mouvements rapides de l'utilisateur en proposant toujours une image, certes de qualité réduite, mais sans latence. Une image de bonne qualité étant téléchargée lorsque la position est stabilisée.

En parallèle, lorsque la composante audio du contenu audiovisuelle est restituée dans un casque audio, une rotation est appliquée au son spatialisé afin de faire correspondre la position des sources sonores à l'orientation de l'utilisateur.

L'invention apporte une amélioration en proposant d'anticiper plus finement les changements d'orientation de l'utilisateur. L'idée inventive consiste à analyser une composante audio du contenu en cours de restitution et de déterminer des évènements audio susceptibles d'attirer l'attention de l'utilisateur et de le faire se tourner vers l'origine de l'évènement sonore, pour ensuite télécharger par anticipation les images qui devront être affichées si l'utilisateur se tourne vers l'origine du bruit. Par exemple, un bruit soudain provoqué par un objet hors du champ de vision de l'utilisateur provoquera la plupart du temps un changement d'orientation de l'utilisateur qui se positionnera par reflexe face à l'origine du bruit. L'invention permet d'anticiper ce retournement en téléchargeant par avance les données d'image correspondant à cette nouvelle position. Ceci permet de réduire la latence tout en préservant la qualité et une bande passante réduite car les images sont déjà téléchargées au moment où l'utilisateur se retourne.

L'invention est décrite selon un mode de réalisation simplifié en prenant pour exemple d'une vidéo panoramique cylindrique réalisée par exemple en assemblant diverses prises de vues sur un plan horizontal. Une telle vidéo donne à un spectateur la possibilité de se mouvoir sur 360° à l'horizontale grâce à un dispositif de restitution adapté, tel qu'un casque virtuel ou une salle de projection 360. Toutefois, l'invention s'applique également à des contenus panoramique sphériques ou cubiques donnant à un spectateur la possibilité de se mouvoir sur 360° à l'horizontale et à 180° à la verticale dans une sphère virtuelle, à l'aide d'un dispositif de restitution adapté tel qu'un casque virtuel comportant des capteurs de mouvements adaptés pour mesurer, outre une vitesse angulaire horizontale, une inclinaison par rapport au sol. Dans un tel mode de réalisation, l'utilisateur 100 peut ainsi s'orienter dans toute direction afin d'observer des parties de contenu situées tout autour de lui, en haut ou en bas.

Le contenu audiovisuel comprend également une composante audio spatialisée. Une telle composante audio spatialisée permet à l'utilisateur de percevoir des sons autour de lui. Par exemple, le bruit 107 représenté sur la figure 1a est perçu par l'utilisateur 100 comme provenant de la droite, lorsqu'il est orienté dans une direction d'observation 103.

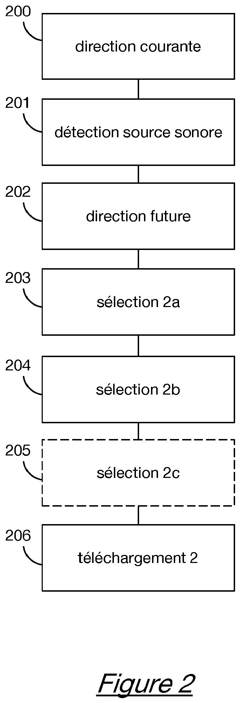

Les différentes étapes du procédé de sélection vont maintenant être décrites, en référence à la figure 2, selon un premier mode de réalisation dans lequel le procédé est mis en oeuvre sur un dispositif de restitution panoramique, tel que par exemple un casque virtuel. Bien entendu, le procédé peut être mis en oeuvre sur un terminal associé au casque virtuel, comme par exemple une console de jeux ou un ordinateur portable auquel est connecté le casque virtuel.

**Lors d'une première étape 200,** une direction d'observation courante de l'utilisateur est déterminée. Cette direction peut correspondre à un angle par rapport à une direction de référence. Cette direction est déterminée par au moins un capteur de mouvements associé au dispositif de restitution, comme par exemple un capteur gyroscopique et/ou un accéléromètre intégrés dans un casque virtuel. La direction peut également être déterminée à partir d'une caméra adaptée pour capturer des images d'un utilisateur, les analyser et déterminer la direction dans laquelle il regarde. De tels algorithmes de suivi de regard sont connus.

En référence à la figure 1a, la direction d'observation 103 de l'utilisateur 100 est déterminée à partir de capteurs gyroscopiques intégrés au casque virtuel 101. Cette direction correspond à un angle de rotation entre une direction de référence 102 et la direction courante 103. En variante, la direction d'observation peut être déterminée par une analyse des mouvements oculaires d'un utilisateur, et en particulier en déterminant une direction dans laquelle regarde l'utilisateur. Des procédés permettant de déterminer une direction du regard sont connus et plusieurs technologies sont à la disposition de l'homme du métier pour mettre en oeuvre la détermination d'une direction dans laquelle regarde un utilisateur.

**A l'étape 201,** une composante audio spatialisée du contenu audiovisuel est analysée de manière à déterminer l'emplacement d'une source sonore par rapport à la direction d'observation courante de l'utilisateur.

Selon une première variante appelée « channel-based », le dispositif de restitution analyse le signal audio de chacun des canaux afin de déterminer, dans une réalisation simple, une direction correspondant au haut-parleur dont l'énergie est la plus élevée. Pour cela, la composante audio spatialisée comporte au moins deux canaux. Une autre méthode permettant de localiser une source sonore à partir de données audio multicanales est donnée dans le document "A method to convert stéréo to multi-channel sound », Roy Irwan and Ronald M. Aarts, AES 19TH INTERNATIONAL CONFERENCE, SCHLOSS ELMAU, GERMANY, 2001 JUNE 21{24.

On entend par « composante audio spatialisée » une composante audio du contenu audiovisuel comportant au moins deux canaux dont le signal est configuré pour permettre à un auditeur de percevoir l'origine d'un son particulier par rapport à son orientation. Dans l'exemple le plus simple, il s'agit d'une composante stéréo adaptée pour restituer des sons à gauche ou à droite de l'auditeur. Dans les variantes les plus avancées, la composante audio peut être un flux 5.1 comportant des signaux audio destinés à 5 haut-parleurs et un caisson de basse positionnés autour de l'auditeur d'une manière prédéfinie, un flux 5.1.2 comprenant en outre deux haut-parleurs en élévation, ou encore une composante comportant un nombre quelconque de canaux. La composante audio spatialisée permet ainsi l'immersion d'un auditeur dans une scène audio. Une telle scène audio spatialisée est associée à une vidéo panoramique, comme par exemple une vidéo à 360 degrés. Ainsi, il est possible de faire correspondre l'origine des sons perçus par l'utilisateur avec des objets visuels de la vidéo pour améliorer encore la sensation d'immersion. Lorsque la scène audio est restituée dans un casque audio, le terminal applique une rotation à la scène de manière à la faire correspondre à l'orientation de l'utilisateur.

Selon une seconde variante dite « object-based », le dispositif de restitution obtient une information de localisation d'une source sonore à partir de métadonnées associées à la composante audio, souvent mono dans la variante « object-based », du contenu audiovisuel. De telles métadonnées peuvent être comprises dans la composante audio et permettent d'associer des coordonnées à un objet sonore particulier. Par exemple, dans le cas d'une composante audio au format AC4 (*ETSI TS 103 190-2. Digital Audio Compression (AC-4) Standard, Part 2: Immersive and personalized audio*), des métadonnées sous forme de coordonnées dans un repère à 3 dimensions de type pos3D_X, pos3D_Y, pos3D_Z sont associées à un objet sonore particulier. Selon le standard MPEG-H (*MPEG-H 3DAudio, ISO-IEC_23008-3),* ces métadonnées désignent l'emplacement d'un objet sonore particulier sous la forme de coordonnées polaires du type azimut, élévation, rayon. Le dispositif de restitution peut ainsi obtenir simplement la position des différentes sources sonores composant la scène spatialisée.

Selon une troisième variante dite « scene-based », la composante audio est au format « Ambisonic » ou HOA pour « Higher Order Ambisonic » (*J*. *Daniel, "Représentation de champs acoustiques, application à la transmission et à la reproduction de scènes sonores complexes dans un contexte multimedia", PhD Thesis, 200).*

Selon cette technologie, le champ sonore est décomposé sous forme d'harmoniques sphériques. Ainsi, plutôt que de transmettre les canaux qui doivent alimenter des haut-parleurs placés à des positions bien particulières, des signaux audio appelés « composantes Ambisonic » transportent (sous forme de différence d'amplitude entre composantes) l'information du champ sonore qui doit être reconstitué au milieu des haut-parleurs placés à des positions arbitraires: le décodage spatial HOA permet donc d'adapter le rendu à une disposition particulière des haut-parleurs. Le format HOA possède ainsi toute l'information sur les sources sonores, mais pas de manière directement exploitable comme dans la seconde variante. Il est donc nécessaire, d'effectuer une analyse de la scène sonore afin d'extraire la position des sources. Une telle analyse de la scène sonore peut se baser sur le comportement du vecteur vélocité ou du vecteur énergie, pouvant pointer dans la direction d'une source ponctuelle (voir J. Daniel, "Evolving views on HOA: from technological to pragmatic concerns", AMBISONICS SYMPOSIUM 2009, June 25-27, Graz et Juha Vilkamo, "Spatial Sound Reproduction with Frequency Band Processing of B-format Audio Signais", Master's Thesis, Espoo, May 28, 2008). Cette analyse peut être effectuée dans le domaine temporel, ou, pour plus de précision ou de robustesse, dans le domaine temps-fréquence.

Des approches hybrides sont également possibles: la transmission d'une scène sonore dans une approche multicanale ou HOA peut passer par la décomposition en sources sonores accompagnées de métadonnées (les sources sonores sont extraites par une analyse du signal multicanale et une information concernant leurs localisations les accompagne) ; ce cas revient à celui exposé dans l'approche « object-based » puisqu'une information de position est déjà accessible via la réalisation d'une analyse de scène réalisée lors de l'encodage audio. Selon le type d'information disponible, il sera éventuellement nécessaire d'effectuer un traitement afin d'extraire une information spatiale pertinente (angulaire par exemple). Par exemple, le codec MPEG Surround, qui est un codec « channel-based », peut extraire lors de l'encodage une information spatiale basée sur des relations de niveaux entre canaux (Interchannel Level Différence) qui peut être utilisé pour déterminer la position d'une source. Similairement, le codec MPEG-H 3D Audio, qui supporte le HOA, peut extraire lors de l'encodage une information spatiale (c'est à dire les signaux directionnels actifs) qui peut être utilisée pour déterminer la position d'une source.

La position d'une source sonore peut également être déterminée à partir d'un emplacement initial de la source déterminé par l'une quelconque des méthodes exposées ci-avant et d'une information de vitesse et de direction de déplacement associée à ladite source. La vitesse et la direction de la source peuvent être obtenues à partir de métadonnées, d'une analyse du signal audio et/ou d'une analyse d'un objet visuel de la vidéo associé à la source sonore. La qualité de la vidéo peut alors être adaptée à la vitesse de déplacement en téléchargeant les parties d'image à partie d'une représentation encodée à un débit particulier. Ainsi, lorsque par exemple la vitesse de déplacement de la source sonore est rapide, les parties d'image visibles sur le parcours peuvent être téléchargées à partir d'une représentation de basse qualité, car l'utilisateur suivant la source sonore n'aura pas le temps de s'attacher aux détails. En variante, la qualité peut être progressivement améliorée ou réduite en téléchargeant des parties d'images à partir de représentations encodées à différentes qualités.

La figure 1a illustre une source sonore 107 positionnée sur la droite de l'utilisateur lorsque ce dernier observe la scène dans la direction 103.

**A l'étape 202,** au moins une direction d'observation future est déterminée à partir de l'emplacement d'une source sonore. Cette direction d'observation future correspond par exemple à l'amplitude d'une rotation depuis une direction de référence jusqu'à une direction pointant vers l'emplacement de la source sonore déterminé à l'étape 201.

Lors de **l'étape 203,** le casque de réalité virtuelle 101 détermine des parties de l'image panoramique 120 qui sont visibles lorsque l'utilisateur regarde dans la direction d'observation courante 103. Les parties de l'image visibles sont sélectionnées à partir de la direction 103, du champ de vision 106 et de la distance de projection de l'image 120. Ainsi, à partir de calculs simples biens connus de l'homme du métier, le casque 101 peut déterminer les coordonnées de la zone de l'image 120 qui doit être affichée dans le casque virtuel. La figure 1b illustre ainsi une image panoramique 120 dans laquelle est sélectionnée une zone 121 visible dans le casque virtuel 101 lorsque l'utilisateur observe la scène dans la direction 103 avec un champ de vision 106.

A **l'étape 204,** le casque de réalité virtuelle 101 détermine des parties de l'image panoramique 120 qui sont visibles lorsque l'utilisateur regarde dans la direction d'observation future 108 déterminée à l'étape 202. Cette direction correspond à la direction du regard de l'utilisateur lorsqu'il se positionne face à la source sonore dont l'emplacement est déterminé conformément à l'étape 201. La direction 108 correspond à un angle de rotation 110 par rapport à la direction initiale 102. Les parties de l'image visibles sont sélectionnées à partir de la direction 108, du champ de vision 109 et de la distance de projection de l'image 120. Ainsi, à partir des mêmes calculs que ceux effectués à l'étape 203, biens connus de l'homme du métier, le casque 101 peut déterminer les coordonnées de la zone de l'image 120 qui doit être affichée dans le casque virtuel lorsque l'utilisateur s'oriente pour faire face à la source sonore 107.

La figure 1b illustre ainsi une image panoramique 120 dans laquelle est sélectionnée une zone 122 visible dans le casque virtuel 101 lorsque l'utilisateur observe la scène dans la direction 108 pointant vers l'emplacement de la source sonore 107. Les parties de l'image correspondant à la zone 122 ainsi identifiées peuvent alors être téléchargées en anticipant une rotation de l'utilisateur vers la source sonore 107. De cette façon, le procédé permet d'optimiser l'usage de la bande passante nécessaire au téléchargement des données pour la restitution du contenu audiovisuel en ne téléchargeant que les données qui sont susceptibles d'être visibles par l'utilisateur.

Lors d'une **étape optionnelle 205,** une troisième partie de l'image 123 est sélectionnée. Cette troisième partie d'image est sélectionnée à partir de la direction d'observation courante 103 et de la direction d'observation future 108 déterminée lors des étapes précédentes. En particulier, la troisième partie d'image correspond à une partie d'image située entre la partie d'image 121 sélectionnée à l'étape 200 et la partie d'image 122 sélectionnée à l'étape 203. Par exemple, il s'agit de la partie 123 de l'image 120. Cette partie est visible dans le casque virtuel lorsque l'utilisateur 100 effectue une rotation vers sa droite pour se positionner face à la source sonore 107 et que la direction d'observation est comprise dans le secteur 111 de la figure 1a. Une telle disposition permet d'anticiper non seulement une direction d'observation future selon la localisation d'un évènement sonore dans une scène spatialisée, mais aussi de télécharger les images nécessaires à la restitution du contenu au cours de la rotation de l'utilisateur vers la direction anticipée.

Selon un mode de réalisation particulier, la troisième partie d'image correspond à une partie d'image située entre la partie d'image sélectionnée à l'étape 200 et la partie d'image sélectionnée à l'étape 203, la troisième partie d'image étant sélectionnée lorsqu'elle est comprise dans le champ de vision de l'utilisateur lorsque l'utilisateur effectue une rotation optimale depuis la direction d'observation courante vers la direction d'observation future, étant entendu que la rotation est dite optimale lorsqu'elle minimise l'angle de rotation nécessaire pour passer de la direction d'observation courante à la direction d'observation future. Par exemple, en référence à la figure 1a, le déplacement optimal pour que l'utilisateur 100 passe de a direction d'observation 103 à la direction d'observation 109 est une rotation sur la droite, car une rotation dans cette direction minimise l'angle de rotation.

Selon une réalisation particulière de l'invention, l'emplacement de la source sonore déterminé est modifié de manière à ce que l'utilisateur soit incité à effectuer une rotation dans un sens particulier. Par exemple, lorsqu'une source sonore est localisée à 180° par rapport à la direction d'observation courante de l'utilisateur 100, il n'est pas possible d'anticiper le sens de rotation que choisira l'utilisateur pour se retourner car les deux déplacements (vers la gauche ou vers la droite) nécessitent une rotation de même amplitude. Afin d'inciter l'utilisateur à se retourner dans un sens particulier qu'il est possible d'anticiper, l'invention propose de modifier l'emplacement de la source sonore dans la scène audio spatialisée de manière à ce que l'utilisateur 100 puisse la percevoir comme provenant d'un côté particulier, par exemple comme étant localisée sur sa droite. Ainsi, l'invention permet d'anticiper le sens de rotation de l'utilisateur, ce qui permet d'améliorer la qualité de l'image lorsque l'utilisateur se tourne vers la source sonore.

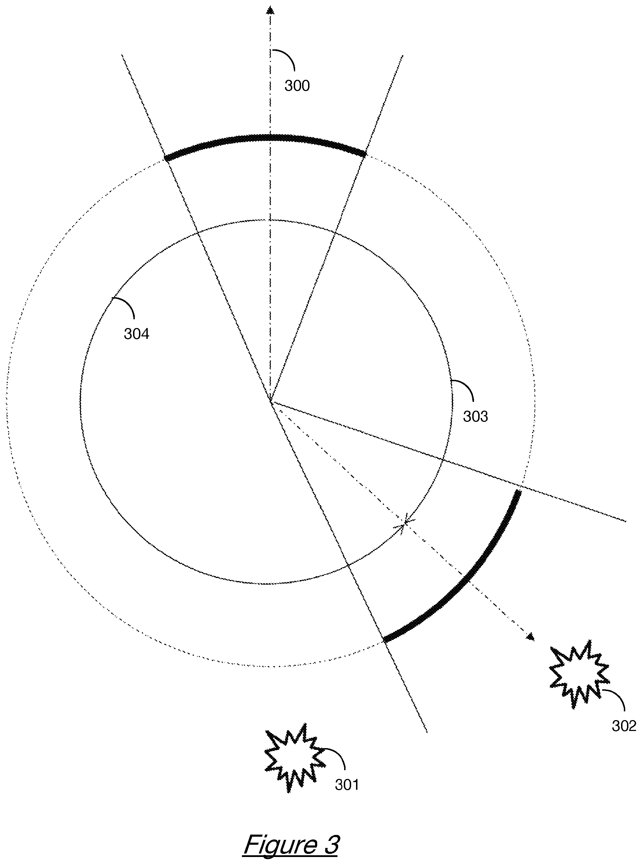

La figure 3 illustre un tel mode de réalisation dans lequel l'utilisateur observe une scène panoramique à 360 ° selon une direction 300. Lorsqu'un évènement sonore 301 est détecté dans une direction opposée à la direction 300 vers laquelle regarde l'utilisateur, il n'est pas possible d'anticiper le fait que l'utilisateur va se retourner vers la gauche ou vers la droite pour se positionner face à l'évènement sonore. Le procédé propose de déplacer l'évènement sonore de l'emplacement 301 vers l'emplacement 302. De cette façon, l'évènement sonore est perçu par l'utilisateur comme s'étant produit sur sa droite, ce qui l'incite à se retourner selon le parcours 303 plutôt que selon le parcours 304. Il devient ainsi possible d'anticiper le sens de rotation de l'utilisateur pour sélectionner les parties d'images nécessaires à une visualisation selon ce parcours.

Un tel déplacement de la source sonore peut être réalisé de différentes manières selon le type de flux audio mis en oeuvre dans le contenu audiovisuel. Si l'emplacement des sources sonores est défini par des métadonnées, la source peut être déplacée en modifiant ces métadonnées. Si l'emplacement est déterminé par une analyse de différents canaux du signal audio, un tel déplacement de la source peut être simulé par une modification du volume de restitution d'un canal particulier. Dans l'exemple précité, le volume d'un haut-parleur situé à droite de l'utilisateur peut être augmenté de manière à renforcer la perception de l'évènement sonore sur la droite de l'utilisateur.

Lors de l'étape 206, les parties d'image sélectionnées aux étapes 200, 202 et 203 sont téléchargées et affichées par le dispositif de restitution 101 selon l'orientation de l'utilisateur 100.

En variante, les images ou parties d'image qui n'ont pas été sélectionnées selon le procédé sont téléchargées à partir d'une seconde représentation d'une première qualité, par exemple une basse qualité, et les parties sélectionnées sont téléchargées à partie d'une représentation d'une seconde qualité, par exemple une qualité supérieure à la première qualité. Le procédé permet ainsi de garantir qu'une image pourra être affichée quelle que soit l'orientation de l'utilisateur, tout en anticipant les mouvements de l'utilisateur pour proposer des images de bonne qualité dans les directions dans lesquelles il est susceptible de se retourner.

Le casque virtuel 101 peut déterminer les segments de données audiovisuelles correspondant à l'orientation de l'utilisateur à partir d'un fichier descripteur du contenu audiovisuel. Un tel descripteur est par exemple un fichier manifeste de type MDP (Media Présentation Description) comprenant des liens de téléchargement correspondant à différents parties d'une vidéo panoramique en fonction d'une direction d'observation particulière. Un tel mécanisme est mis en oeuvre dans les standards MPEG-DASH SRD (Spatial Relationship Description) et offre la possibilité de décrire un arrangement spatial de plusieurs parties d'une vidéo. Le standard HEVC défini également des outils permettant d'agencer spatialement plusieurs parties d'une vidéo. Le standard HEVC permet en effet de découper une vidéo en tuiles pouvant être décodées indépendamment les unes des autres. De cette façon un terminal peut facilement émettre une requête pour télécharger les données audiovisuelles correspondant à une direction d'observation déterminée au cours des étapes 200 et/ou 202.

Sans préjudice à l'inventivité de la solution, les fonctionnalités décrites en relation au casque virtuel 101 peuvent être réparties sur plusieurs dispositifs distincts. Par exemple, le casque virtuel peut être raccordé à un terminal tel qu'un ordinateur personnel ou une console de jeu sur lequel sont exécutées les étapes du procédé, le casque permettant la capture des mouvements de l'utilisateur et la restitution du contenu audiovisuel. Du point de vue vidéo, l'usage d'une TV associée à un dispositif permettant d'effectuer des rotations est possible, et du point de vue audio, l'usage de haut-parleurs réels, ou une simulation de ceux-ci en binaural au casque est également possible.

Selon une réalisation particulière de l'invention, les étapes 200, 203 et 206 sont exécutées par le casque virtuel et les étapes 201, 202, 204 et 205 sont exécutées par un serveur de diffusion à partir duquel le contenu audiovisuel est téléchargé pour être visionné. Dans un tel mode de réalisation, lorsque le serveur de diffusion hébergeant le contenu audiovisuel consulté par l'utilisateur 100 reçoit une requête de téléchargement pour une partie de vidéo correspondant à une direction d'observation particulière, il exécute les étapes 201 et 202 décrites ci-avant, afin de déterminer une direction d'observation future dans laquelle l'utilisateur 100 est susceptible de s'orienter. Le serveur reçoit une telle requête suite à l'exécution par le terminal de l'étape 206, au cours de laquelle une requête de téléchargement des segments de données, correspondant à une visualisation dans la direction d'observation déterminée à l'étape 200 et sélectionnés à l'étape 203, est émise.

Si une direction d'observation future a pu être déterminée lors des étapes 201 et 202, le serveur exécute les étapes 204 et/ou 205 de manière à sélectionner des parties d'image ou des segments vidéo correspondant à une visualisation du contenu dans la direction déterminée. Pour cela, le serveur dispose d'un descripteur dans lequel sont associés des segments vidéo avec des directions d'observation. Ainsi, à partir d'une direction particulière, le serveur détermine les données qui doivent être transmises au casque virtuel 101.

Ainsi, en réponse à la requête de téléchargement des données correspondant à la direction d'observation courante reçue, le serveur transmet, outre les données demandées dans la requête de téléchargement, des données supplémentaires correspondant à une direction d'observation future dans laquelle l'utilisateur est susceptible de s'orienter.

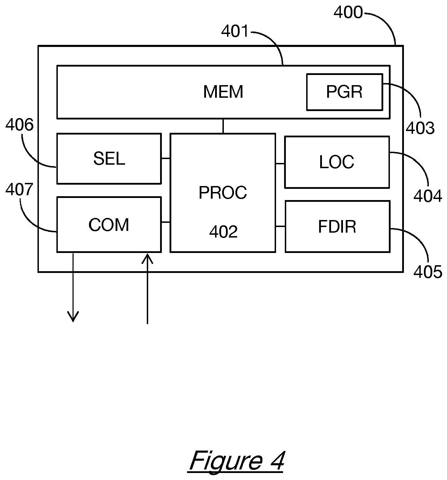

La figure 4 illustre, selon un mode particulier de réalisation de l'invention, un dispositif 400 mettant en oeuvre le procédé de sélection.

Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en oeuvre le procédé de sélection tel que décrit dans l'invention en référence à la figure 2, et notamment les étapes de détermination de l'emplacement d'une source sonore dans une composante audio spatialisée du contenu audiovisuel, de détermination d'une direction d'observation future à partir de l'emplacement déterminé, de sélection d'au moins une seconde partie de l'image à partir de la direction d'observation future déterminée, et de téléchargement des parties d'image sélectionnées.

À l'initialisation, les instructions du programme d'ordinateur 403 sont par exemple chargées dans une mémoire RAM (Random Access Memory en anglais) avant d'être exécutées par le processeur de l'unité de traitement 402. Le processeur de l'unité de traitement 402 met en oeuvre les étapes du procédé d'organisation selon les instructions du programme d'ordinateur 403.

Le dispositif 400 comprend des moyens de communication 407, comme par exemple une interface réseau COM, permettant au dispositif de se connecter à un réseau de télécommunication et d'échanger des données avec d'autres dispositifs par l'intermédiaire du réseau de télécommunications, et en particulier de télécharger des parties d'un contenu audiovisuel à partir d'un serveur de diffusion. Les moyens de communication 407 correspondent par exemple à une interface réseau sans fil de type Wifi ou cellulaire, ou encore une interface Ethernet ou tout autre type d'interface réseau adaptées pour échanger des données d'autres équipements, et notamment avec un serveur de diffusion de contenu audiovisuels.

Le dispositif 400 comprend également des moyens de localisation 404 d'une source sonore à partir d'une composante audio spatialisée d'un flux audiovisuel. De tels moyens peuvent être mis en oeuvre par des instructions de programme d'ordinateur configurées pour analyser un flux audio spatialisé, comme par exemple un flux stéréo ou multicanal (par exemple un flux 5.1 ou 5.1.2) afin de déterminer l'emplacement d'une source sonore par rapport à une position occupée par un auditeur. En particulier, les moyens de localisation 404 mettent en oeuvre l'étape 201 du procédé décrite précédemment. De telles instructions sont stockées dans une mémoire du dispositif, par exemple dans la mémoire MEM et exécutées par un processeur, par exemple le processeur PROC. L'analyse peut porter sur les données du flux audio ou sur des métadonnées associées au flux audio. L'emplacement de la source sonore peut être défini par une direction et une distance par rapport à l'auditeur, la direction correspondant à un angle par rapport à une position de référence.

Le dispositif 400 comprend aussi des moyens de détermination 405 d'une direction future à partir de l'emplacement déterminé par les moyens 404. De tels moyens peuvent être mis en oeuvre par des instructions de programme d'ordinateur stockées dans une mémoire, comme par exemple dans la mémoire MEM et exécutées par un processeur, comme par exemple par le processeur PROC. En particulier, les moyens de détermination d'une direction future 405 mettent en oeuvre l'étape 202 du procédé telle que décrite précédemment.

Le dispositif 400 comprend en outre des moyens de sélection 406 d'au moins une partie de l'image à partir de la direction d'observation future déterminée par les moyens 405. De tels moyens de sélection peuvent être mis en oeuvre par des instructions de programme d'ordinateur stockées dans une mémoire, comme par exemple dans la mémoire MEM et exécutées par un processeur tel que le processeur PROC. En particulier, les moyens de sélection d'au moins une partie de l'image mettent en oeuvre l'étape 204 du procédé telle que décrite précédemment. Selon une réalisation particulière, les moyens de sélection 406 mettent en oeuvre l'étape 205 décrite précédemment.

Le dispositif 400 comporte enfin des moyens de téléchargement des parties d'images sélectionnées par les moyens de sélection 406. De tels moyens peuvent être mis en oeuvre par l'interface de communication 407.

## Revendications

1. Procédé de sélection d'au moins une partie d'image à télécharger (204) pour restituer un contenu audiovisuel au moyen d'un dispositif de restitution, le procédé étant **caractérisé en ce qu'**il comporte les étapes suivantes :
- détermination (200) d'une direction d'observation courante d'un utilisateur,
- détermination (201) de l'emplacement d'une source sonore dans une composante audio spatialisée du contenu audiovisuel,
- détermination (202) d'une direction d'observation future à partir de l'emplacement déterminé,
- sélection (204) d'au moins une première partie de l'image à partir de la direction d'observation future déterminée, comprenant des parties d'images visibles depuis au moins ladite direction d'observation future déterminée,
- sélection (204) d'au moins une seconde partie de l'image comprenant des parties d'images visibles comprises entre la direction d'observation courante déterminée et la direction d'observation future déterminée, et
- téléchargement (206) desdites parties d'image sélectionnées à une qualité au moins supérieure à une première qualité utilisée pour télécharger une autre partie de l'image.

2. Procédé selon la revendication 1 dans lequel l'emplacement de la source sonore à partir de laquelle est déterminée la direction d'observation future est déterminé par une analyse d'au moins une composante audio du contenu audiovisuel.

3. Procédé selon l'une quelconque des revendications précédentes dans lequel l'emplacement de la source sonore à partir de laquelle est déterminée la direction d'observation future est déterminé par des métadonnées associées à une ou plusieurs composantes audio du contenu audiovisuel.

4. Procédé selon l'une quelconque des revendications précédentes dans lequel l'emplacement de la source sonore peut également être déterminé à partir d'un emplacement initial de la source et d'une information de vitesse et de direction de déplacement associée à ladite source et la qualité de la vidéo est adaptée à la vitesse de déplacement en téléchargeant les parties d'image à partir d'une représentation encodée à différents débits .

5. Procédé selon la revendication 1 dans lequel la seconde partie de l'image sélectionnée correspond à une rotation de l'utilisateur, depuis la direction d'observation courante vers la direction d'observation future, dans un sens qui minimise l'amplitude de cette rotation.

6. Procédé selon l'une des revendications précédentes dans lequel l'emplacement de la source sonore déterminé est modifié de manière telle que l'utilisateur soit incité à effectuer au moins une rotation dans un sens particulier pour s'orienter vers la source sonore.

7. Dispositif de sélection d'au moins une partie d'image à télécharger pour restituer un contenu audiovisuel au moyen d'un dispositif de restitution immersif, le dispositif étant **caractérisé en ce qu'**il comporte :
- des moyens de détermination (200) d'une direction d'observation courante d'un utilisateur,
- des moyens (404) de détermination de l'emplacement d'une source sonore dans une composante audio spatialisée du contenu audiovisuel,
- des moyens (405) de détermination d'une direction d'observation future à partir de l'emplacement déterminé,
- des moyens (406) de sélection d'au moins une première partie de l'image à partir de la direction d'observation future déterminée, comprenant des parties d'images visibles depuis au moins ladite direction d'observation future déterminée et d'au moins une seconde partie de l'image comprenant des parties d'images visibles comprises entre la direction d'observation courante déterminée et la direction d'observation future déterminée,
- des moyens (407) de téléchargement desdites parties d'image sélectionnées à une qualité au moins supérieure à une première qualité utilisée pour télécharger une autre partie de l'image..

8. Terminal de restitution comprenant un dispositif de sélection selon la revendication 7.

9. Serveur de diffusion comprenant un dispositif de sélection selon la revendication 7.

10. Programme d'ordinateur comportant des instructions pour l'exécution du procédé de sélection selon l'une quelconque des revendications 1 à 6, lorsque le programme est exécuté par un processeur.

11. Support d'informations lisible par un ordinateur sur lequel est enregistré un programme d'ordinateur comprenant des instructions pour l'exécution des étapes du procédé de sélection selon l'une des revendications 1 à 6.

## Patentansprüche

1. Verfahren zur Auswahl mindestens eines herunterzuladenden Bildabschnitts (204), um einen audiovisuellen Inhalt mittels einer Wiedergabevorrichtung wiederzugeben, wobei das Verfahren **dadurch gekennzeichnet ist, dass** es die folgenden Schritte aufweist:
- Bestimmung (200) einer aktuellen Beobachtungsrichtung eines Benutzers,
- Bestimmung (201) des Standorts einer Klangquelle in einer spatialisierten Audiokomponente des audiovisuellen Inhalts,
- Bestimmung (202) einer zukünftigen Beobachtungsrichtung ausgehend von dem bestimmten Standort,
- Auswahl (204) mindestens eines ersten Abschnitts des Bilds ausgehend von der bestimmten zukünftigen Beobachtungsrichtung, der von mindestens der bestimmten zukünftigen Beobachtungsrichtung aus sichtbare Bildabschnitte enthält,
- Auswahl (204) mindestens eines zweiten Abschnitts des Bilds, der sichtbare Bildabschnitte enthält, die zwischen der bestimmten aktuellen Beobachtungsrichtung und der bestimmten zukünftigen Beobachtungsrichtung enthalten sind, und
- Herunterladen (206) der ausgewählten Bildabschnitte in einer Qualität mindestens höher als eine erste Qualität, die verwendet wird, um einen anderen Abschnitt des Bilds herunterzuladen.

2. Verfahren nach Anspruch 1, wobei der Standort der Klangquelle, von der aus die zukünftige Beobachtungsrichtung bestimmt wird, von einer Analyse mindestens einer Audiokomponente des audiovisuellen Inhalts bestimmt wird.

3. Verfahren nach einem der vorhergehenden Ansprüche, wobei der Standort der Klangquelle, von der aus die zukünftige Beobachtungsrichtung bestimmt wird, von Metadaten bestimmt wird, die einer oder mehreren Audiokomponenten des audiovisuellen Inhalts zugeordnet sind.

4. Verfahren nach einem der vorhergehenden Ansprüche, wobei der Standort der Klangquelle ebenfalls ausgehend von einem Ausgangsstandort der Quelle und von einer der Quelle zugeordneten Bewegungsgeschwindigkeits- und Bewegungsrichtungsinformation bestimmt werden kann, und die Qualität des Videos an die Bewegungsgeschwindigkeit angepasst wird, indem die Bildabschnitte ausgehend von einer mit verschiedenen Bitraten codierten Darstellung heruntergeladen werden.

5. Verfahren nach Anspruch 1, wobei der zweite Abschnitt des ausgewählten Bilds einer Drehung des Benutzers von der aktuellen Beobachtungsrichtung in die zukünftige Beobachtungsrichtung in einer Richtung entspricht, die die Amplitude dieser Drehung minimiert.

6. Verfahren nach einem der vorhergehenden Ansprüche, wobei der Standort der bestimmten Klangquelle so verändert wird, dass der Benutzer veranlasst wird, mindestens eine Drehung in einer bestimmten Richtung auszuführen, um sich zur Klangquelle auszurichten.

7. Vorrichtung zur Auswahl mindestens eines herunterzuladenden Bildabschnitts, um einen audiovisuellen Inhalt mittels einer immersiven Wiedergabevorrichtung wiederzugeben, wobei die Vorrichtung **dadurch gekennzeichnet ist, dass** sie aufweist:
- Einrichtungen zur Bestimmung (200) einer aktuellen Beobachtungsrichtung eines Benutzers,
- Einrichtungen (404) zur Bestimmung des Standorts einer Klangquelle in einer spatialisierten Audiokomponente des audiovisuellen Inhalts,
- Einrichtungen (405) zur Bestimmung einer zukünftigen Beobachtungsrichtung ausgehend vom bestimmten Standort,
- Einrichtungen (406) zur Auswahl mindestens eines ersten Abschnitts des Bilds ausgehend von der bestimmten zukünftigen Beobachtungsrichtung, der von mindestens der bestimmten zukünftigen Beobachtungsrichtung aus sichtbare Bildabschnitte enthält, und mindestens eines zweiten Abschnitts des Bilds, der sichtbare Bildabschnitte enthält, die zwischen der bestimmten aktuellen Beobachtungsrichtung und der bestimmten zukünftigen Beobachtungsrichtung enthalten sind,
- Einrichtungen (407) zum Herunterladen der ausgewählten Bildabschnitte in einer Qualität mindestens höher als eine erste Qualität, die verwendet wird, um einen anderen Abschnitt des Bilds herunterzuladen.

8. Wiedergabe-Endgerät, das eine Auswahlvorrichtung nach Anspruch 7 enthält.

9. Verbreitungsserver, der eine Auswahlvorrichtung nach Anspruch 7entthält.

10. Computerprogramm, das Anweisungen zur Ausführung des Auswahlverfahrens nach einem der Ansprüche 1 bis 6 enthält, wenn das Programm von einem Prozessor ausgeführt wird.

11. Computerlesbarer Informationsträger, auf dem ein Computerprogramm aufgezeichnet ist, das Anweisungen zur Ausführung der Schritte des Auswahlverfahren nach einem der Ansprüche 1 bis 6enthält.

## Claims

1. Method for selecting at least one image portion to be downloaded (204) in order to render audiovisual content by way of a rendering device, the method being **characterized in that** it includes the following steps:
- determining (200) a current direction of observation of a user,
- determining (201) the location of a sound source in a spatialized audio component of the audiovisual content,
- determining (202) a future direction of observation on the basis of the determined location,
- selecting (204) at least one first portion of the image on the basis of the determined future direction of observation, comprising image portions visible from at least said determined future direction of observation,
- selecting (204) at least one second portion of the image comprising visible image portions between the determined current direction of observation and the determined future direction of observation, and
- downloading (206) said selected image portions with a quality at least greater than a first quality used to download another portion of the image.

2. Method according to Claim 1, wherein the location of the sound source on the basis of which the future direction of observation is determined is determined by analysing at least one audio component of the audiovisual content.

3. Method according to either one of the preceding claims, wherein the location of the sound source on the basis of which the future direction of observation is determined is determined by metadata associated with one or more audio components of the audiovisual content.

4. Method according to any one of the preceding claims, wherein the location of the sound source may also be determined on the basis of an initial location of the source and of speed and direction of movement information associated with said source and the quality of the video is adapted to the speed of movement by downloading the image portions from a representation encoded at various rates.

5. Method according to Claim 1, wherein the second selected portion of the image corresponds to a rotation of the user, from the current direction of observation to the future direction of observation, in a direction that minimizes the amplitude of this rotation.

6. Method according to one of the preceding claims, wherein the determined location of the sound source is modified such that the user is incited to perform at least one rotation in a particular direction in order to orient himself toward the sound source.

7. Device for selecting at least one image portion to be downloaded in order to render audiovisual content by way of an immersive rendering device, the device being **characterized in that** it includes:
- means for determining (200) a current direction of observation of a user,
- means (404) for determining the location of a sound source in a spatialized audio component of the audiovisual content,
- means (405) for determining a future direction of observation on the basis of the determined location,
- means (406) for selecting at least one first portion of the image on the basis of the determined future direction of observation, comprising image portions visible from at least said determined future direction of observation, and at least one second portion of the image comprising visible image portions between the determined current direction of observation and the determined future direction of observation, and
- means (407) for downloading said selected image portions with a quality at least greater than a first quality used to download another portion of the image.

8. Rendering terminal comprising a selection device according to Claim 7.

9. Broadcast server comprising a selection device according to Claim 7.

10. Computer program including instructions for executing the selection method according to any one of Claims 1 to 6 when the program is executed by a processor.

11. Computer-readable information medium on which a computer program comprising instructions for executing the steps of the selection method according to one of Claims 1 to 6 is recorded.
